# EUROPÄISCHE PATENTANMELDUNG

(11) **EP 4 163 605 A1**
(43) Veröffentlichungstag der Anmeldung: **12.04.2023**
(21) Anmeldenummer: 21201376.7
(22) Anmeldetag: 07.10.2021
(51) Int. Cl.: G01F 23/80, G01F 15/063, G01F 15/06

(54) **FELDGERÄT MIT KONSOLIDIERTER ANZEIGE**

(71) Anmelder: VEGA Grieshaber KG, 77709 Wolfach (DE)
(72) Erfinder: GARCIA, Juan, 77781 Biberach (DE); HÖLL, Ralf, 79822 Titisee-Neustadt (DE)
(74) Vertreter: Maiwald GmbH

(57) **Zusammenfassung**

Die Erfindung betrifft ein Feldgerät mit einer Anzeigevorrichtung. Das Feldgerät (F1) weist Sensor (S1) zur Füllstandmessung, zur Topologiebestimmung, zur Grenzstandbestimmung, zur Durchflussmessung, zur Druckmessung und/oder zur Temperaturmessung auf. Das Feldgerät (F1) ist in einem Netzwerk angeordnet und ist dazu eingerichtet, mit mindestens einem weiteren Feldgerät in Kommunikationsverbindung zu stehen. Das Feldgerät (F1) weist weiterhin eine Anzeigevorrichtung (A1) auf, die dazu eingerichtet ist, Informationen von dem mindestens einen weiteren Feldgerät (Fn) zu empfangen und die Informationen gemäß einer Vorschrift mit den Informationen des weiteren Feldgeräts (Fn) zu konsolidieren.

## Beschreibung

### Gebiet der Erfindung

Die Erfindung betrifft ein Feldgerät, insbesondere zur Füllstandmessung, zur Topologiebestimmung, zur Grenzstandbestimmung, zur Durchflussmessung, zur Druckmessung und/oder zur Temperaturmessung, mit einer Anzeigevorrichtung. Weiterhin betrifft die Erfindung ein Verfahren, ein Programmelement, ein computerlesbares Medium und eine Verwendung.

### Hintergrund

Messgeräte, insbesondere Feldgeräte, werden in vielen Fällen zur Fabrikautomatisierung, oder auch zur Überwachung von mehreren Messpunkten eingesetzt, beispielsweise zur Überwachung eines Flusssystems, einer Produktions- oder Lagerhalle und/oder anderen Systemen, bei denen die gemessenen Werte zumindest eine bestimmte Art von Zusammenhang aufweisen, z.B. einen logischen oder fluidtechnischen Zusammenhang. In zumindest einigen Fällen kann es dabei nützlich sein, nicht nur den Messwert oder die Messwerte eines einzelnen Feldgeräts zu kennen, sondern den Messwert oder die Messwerte auch von anderen Messgeräten.

### Zusammenfassung

Es ist Aufgabe der Erfindung, ein Feldgerät zur Verfügung zu stellen, welche die Anzeige von Messwerten von anderen Feldgeräten ermöglicht. Diese Aufgabe wird durch den CGS:THU

Gegenstand der unabhängigen Patentansprüche gelöst. Weiterbildungen der Erfindung ergeben sich aus den Unteransprüchen und der folgenden Beschreibung.

Ein Aspekt betrifft ein Feldgerät, aufweisend einen Sensor zur Füllstandmessung, zur Topologiebestimmung, zur Grenzstandbestimmung, zur Durchflussmessung, zur Druckmessung und/oder zur Temperaturmessung, wobei das Feldgerät in einem Netzwerk angeordnet ist und dazu eingerichtet ist, mit mindestens einem weiteren Feldgerät in Kommunikationsverbindung zu stehen, wobei das Feldgerät weiterhin eine Anzeigevorrichtung aufweist, die dazu eingerichtet ist, Informationen von dem mindestens einen weiteren Feldgerät zu empfangen und die Informationen gemäß einer Vorschrift mit den Informationen des weiteren Feldgeräts zu konsolidieren.

Das Feldgerät, weist mindestens einen Sensor auf; der Sensor kann beispielsweise zur Füllstandmessung, zur Topologiebestimmung, zur Grenzstandbestimmung, zur Durchflussmessung, zur Druckmessung und/oder zur Temperaturmessung geeignet und/oder eingerichtet sein. Die Messwerte von dem mindestens einen Sensor können z.B. als eine Einzelinformation, eine Sequenz von Informationen und/oder in irgendeiner Weise zusammengefasst verfügbar sein. Der oder die Messwerte können auch ein Resultat einer Verknüpfung (z.B. einer mathematischen Operation) verschiedener Messwerte von einzelnen und/oder unterschiedlichen Feldgeräten sein. Das Feldgerät kann darüber hinaus noch einen oder mehrere Aktuatoren und/oder Steuergerät; als Beispiel kann z.B. ein Ventil dienen, dessen Stellung beeinflusst werden kann, das aber auch die aktuelle Stellung messen oder anderweitig feststellen kann, so dass die aktuelle Ventilstellung z.B. dargestellt und/oder übermittelt werden kann. Die Feldgeräte können dabei physikalische Kenngrößen wie zum Beispiel Druck, Temperatur, Füllstand, Durchfluss, Stellungsregler, Ventilstellungen, usw. verfügbar machen, verarbeiten, darstellen, übermitteln, etc. Alternativ oder zusätzlich können auch Diagnoseinformationen von den Sensoren und/oder ― z.B. als verarbeitete oder abgeleitete Informationen - von dem Steuergerät verfügbar sein, z.B. in Form eines "Gesundheitsstatus" wie z.B. "betriebsbereit", "Störung", etc. Weiterhin können z.B. Identifikationsinformationen ― wie Messstellenname, MAC-Adresse, IP-Adresse, etc. - verfügbar sein.

Das Netzwerk, in dem die Feldgeräte angeordnet sind, kann drahtgebunden und/oder drahtlos ausgeführt sein, so dass die Feldgeräte miteinander, zumindest zeitweise, in Kommunikationsverbindung stehen können. Das Netzwerk kann aus mehreren verbundenen (Teil-)Netzwerken bestehen.

Das Feldgerät weist eine Anzeigevorrichtung auf. Die Anzeigevorrichtung kann eine Kommunikationseinheit, die zum Empfang von Informationen, insbesondere von anderen Feldgeräten und/oder einer zentralen Steuerung eingerichtet ist. Die Anzeigevorrichtung kann eine Rechen- und Steuereinheit aufweisen, welche die empfangenen Informationen zur Anzeige auf einem Display der Anzeigevorrichtung aufbereitet. Das Aufbereiten kann z.B. ein Umrechnen der Graphikinformationen in Displayinformationen - z.B. in Pixel - umfassen. Das Aufbereiten kann ein Konsolidieren der empfangenen Informationen mit den eigenen Informationen umfassen. Das Display kann eine beliebige Auflösung aufweisen. Das Display kann auch mehrteilig aufgebaut sein; beispielsweise kann es aus einem elektronischen Papier (e-paper) und einer LED (Leuchtdiode) bestehen, wobei die LED für Warnmeldungen verwendet werden kann, und das elektronische Papier zur Anzeige von Werten, Kurven, etc. Die Anzeigevorrichtung kann z.B. als ein Gerät der Serie PLICSCOM der Firma VEGA ausgeführt sein.

Das Konsolidieren kann z.B. ein Darstellen der empfangenen Informationen pro Feldgerät umfassen, z.B. in einem Format "<Feldgerätename> : <Messwert>". Das Konsolidieren kann z.B. eine Funktion, z.B. die Bildung einer Summe oder eines Durchschnitts der empfangenen Informationen beinhalten. Das Konsolidieren kann z.B. eine Wichtung der empfangenen Informationen umfassen, bis hin zu einem Ausblenden (Gewicht = 0) bestimmter Feldgeräte. Das Konsolidieren kann z.B. eine Bedingung umfassen, z.B. "Anzeigen von Sensoren, die einen Füllstand größer L aufweisen"; analog ein Durchfluss, Temperatur, etc. Es kann mehr als ein Feldgerät geben, das zum Konsolidieren der Informationen eingerichtet ist.

Das Feldgerät ermöglicht nicht nur die Anzeige von Messwerten von anderen Feldgeräten, sondern weist noch zahlreiche weitere Vorteile und/oder Einsatzmöglichkeiten auf:
- Einem Anlagenbetreiber kann eine "gewohnte" Vor-Ort-Anzeige an dem Feldgerät zur Verfügung gestellt werden, die darüber hinaus Informationen von unterschiedlichen weiteren Feldgeräten darstellen kann. Dies kann insbesondere nützlich sein für ein Servicepersonal vor Ort (für Wartung, Instandhaltung, etc.), da unterschiedliche Informationen gleich vor Ort an einer zentralen Stelle sichtbar werden können und nicht mit Spezial-Kommunikationsgeräten - z.B. über eine Leitstelle - erfragt werden müssen. Weiterhin können in zumindest einigen Fällen Wege (z.B. weite Strecken) zu anderen Feldgeräten vermieden werden.
- Ein Feldgerät mit einer konsolidierten Anzeige kann für eine schnelle Übersicht über den Zustand einer ganzen Anlage - oder zumindest eines Teils davon - sorgen, da die Summeninformation der unterschiedlichen Feldgeräte einfach visualisiert werden kann. So können z.B. Messwerte, Diagnosewerte etc. vor Ort schnell und unkompliziert sichtbar gemacht werden. Eine Dezentralisierung bzw. Vor-Ort-Visualisierung, mit Visualisierungen am Feldgerät, kann erreicht werden. Es kann eine Vor-Ort-Visualisierung unterschiedlicher Feldgeräte auf einer Anzeige nahe der Applikationen stattfinden.
- Es kann ein einfaches lokales vor-Ort Visualisierungssystem des Gerätezustandes der überwachten Feldgeräte (1 bis n) realisiert werden. Dies kann einem Techniker vor Ort eine direkte Rückmeldung geben, bzw. auch Sicherheit in Bezug auf die Messungen durch zeitnahes Visualisieren der Information ohne weitere Hilfsmittel bzw. Ethernet basierte Kommunikationsgeräte.
- Ein derartiges Feldgerät kann flexibel und universell - z.B. in einem Ethernet- oder einem anderen Netzwerk - einsetzbar sein. Die betreffenden Ethernet-Feldgeräte können z.B. mittels eines Standardbedienprogramms konfiguriert werden. Ein direkter Anschluss des Feldgerätes mit Anzeige an beliebiger Stelle im Netzwerk kann möglich sein.
- Das Feldgerät nachträglich nachrüstbar gestaltet werden, bzw. im laufenden Betrieb erweiterbar. Die Funktionalität kann z.B. bei Bedarf aktiviert bzw. genutzt werden.
- Das Feldgerät mit Anzeige in der Anlage kann einfach dafür ausgewählt werden, ohne zusätzliche Anzeigen oder anderer Visualisierungssysteme verwenden zu müssen.
- Es kann eine einfache Nutzung einer Anzeige mit Zusatzinformationen in einem Netzwerk erfolgen. Dies kann prinzipiell bei allen Geräten in einem Netzwerk (z.B. mit einer Ethernet-Kommunikationsschnittstelle) stattfinden.
- Es können einfache und schnell umsetzbare oder adaptierte Anzeigeformate für Summeninformationsanzeigen über alle gewünschten Feldgeräte im Netzwerk hinweg eingesetzt werden.
- Die Konsolidierungs-Funktion kann vor Ort an der Applikation bzw. an dem Feldgerät stattfinden, alternativ oder zusätzlich zu einer Sammlung und Darstellung z.B. in einer Cloud, einer Leitwarte, etc. Dies kann auf eine Vielzahl von Geräten (im Feld oder in einer Warte) anwendbar, beispielsweise im industriellen Bereich der Prozess- und Fabrikautomation.
- Dies kann zu einer Entlastung von Steuerungen und übergeordneten Systemen mit Zusatzvisualisierungen am Feldgerät beitragen. Weiterhin kann die Steuerung einfacher gestaltet werden.
- In Summe kann das zu einer Kostenersparnis führen, da keine zusätzliche Anzeige und Messlogik installiert werden muss.

In einigen Ausführungsformen umfassen die Informationen Messwerte und/oder Diagnosen des mindestens einen weiteren Feldgeräts. Damit kann schnell eine Übersicht über wichtige Messdaten erreicht werden.

In einigen Ausführungsformen umfassen die Informationen weiterhin eine Identität des mindestens einen weiteren Feldgerät. Dies können Geräteidentifikationen, Geräteinformationen, und/oder sonstige relevante Informationen. Damit kann eine Zuordnung der Informationen zu einer Vielzahl von Geräten erfolgen.

In einigen Ausführungsformen ist das mindestens eine weitere Feldgerät ein Feldgerät desselben Typs wie das Feldgerät. Dies kann zu einem besonders intuitiven Konsolidieren der empfangenen Werte führen. Beispielsweise können, wenn nur Füllstandmessgeräte konsolidiert werden, "standardmäßig" ― d.h. ohne weiteren Aufwand für eine Konfigurierung - eine Summe und ein Durchschnitt der Füllstände konsolidiert werden, und gegebenenfalls auch z.B. eine Summe de Volumina der Behälter einer Anlage.

In einigen Ausführungsformen umfasst die Vorschrift eine Darstellung von Einzelwerten und/oder eine Darstellung einer Funktion der Einzelwerte. Beispiele einer Funktion der Einzelwerte können z.B. Summe, gewichtete Summe, Differenz, Durchschnitt, Summe von Produkten (z.B. Berechnung von Volumina), skalierte Werte, etc. sein. Dies kann auch ein "Auslassen" bestimmter Feldgeräte oder eine Beibehaltung der letzten Werte umfassen, auch bedingt, z.B. wenn einige Feldgeräte nur selten Werte liefern, und dann diese Feldgeräte bei dem Konsolidieren ausgelassen werden, bzw. deren Werte (bis zum Eintreffen neuer Werte) konstant gehalten werden. Es kann eine Anzeige von unterschiedlichen Informationen wie z.B. Identifikationsinformationen, Prozesswerten, Diagnosemeldungen, Grenzwerte, Statusinformationen, Netzwerkinformationen wie IP-Adressen, Netzwerkbilanzen, usw. stattfinden. In einigen Ausführungsformen - z.B. wenn der Sensor einen Netzwerk-Sniffer aufweist - kann eine Anzeige des Datenverkehrs im Netzwerk oder anderer netzwerktypischer Anzeigeinformationen erfolgen. Es kann eine Trendbeobachtung (z.B. grafisch) unterschiedlicher Feldgeräte auf einer Anzeige durch Anzeigen von Messwerte über die Zeit stattfinden.

Weitere Beispiele können sein:
- Summe aller Diagnosen von Feldgerät 1 bis n, als Diagnoseübersicht verschiedener vernetzter Geräte.
- Summe aller Messwerte von Feldgerät 1 bis n, als Messwertübersicht verschiedener vernetzter Geräte.
- Summe aller Geräteidentifikationen mit zusätzlicher Information (Diagnose, Messwert, ...) von Feldgerät 1 bis n.
- Kombination von Informationen von Feldgerät 1 bis n, beispielsweise Messwert 1 und Diagnose 1, Messwert 2 und Diagnose 2, Messwert n und Diagnose n.
- Verdichtete Diagnosemeldungen z.B. nach NAMUR NE 107 als Sammeldiagnosemeldungen von Feldgerät 1 bis n.
- In der Anzeige umschaltbare Information von Feldgerät 1 bis n, so dass eine Vielzahl von Geräten mit deren gewünschten Informationen auf einer Anzeige dargestellt werden kann.
- Verrechnete bzw. bearbeitete Informationen unterschiedlicher vernetzter Feldgeräte, wie z.B. Darstellung von Messwert 1 + Messwert 2 + Messwert n als eine Gesamtzahl, z.B. als Summenbildung über den Werten der ausgewählten Geräte.
- Verrechnete bzw. bearbeitete Informationen unterschiedlicher vernetzter Feldgeräte, wie z.B. Darstellung von Messwert 1 + Messwert 2 + Messwert n geteilt durch n, als eine (z.B. arithmetische) Mittelwertbildung über die gewünschten Geräte.
- Verrechnete bzw. bearbeitete Informationen unterschiedlicher vernetzter Feldgeräte, wie z.B. eine Differenzbildung von Messwert 1 - Messwert 2.
- Verrechnete bzw. bearbeitete Informationen unterschiedlicher vernetzter Feldgeräte mit weiteren mathematischen Funktionen.
- Bewertung von anliegenden Diagnosemeldungen verschiedener Feldgeräte, z.B. für eine gruppierte Darstellung, gewichtete Darstellung, Übersichtsdarstellung, etc.

In zumindest einigen Ausführungsformen (z.B. bei einer Konfigurierbarkeit der Konsolidierung) kann eine Individualisierung von Visualisierungen am Feldgerät stattfinden. So können z.B. gewünschte Summenvisualisierung an dem Feldgerät aktiviert bzw. parametriert werden. Insbesondere kann, z.B. wenn viele derartige Feldgerät in einer Anlage vorhanden sind, an vielen Orten ein Summenvisualisierung aktiviert bzw. verwendet werden. Damit kann eine schnelle Umsetzung von Kundenanforderung bzw. Visualisierungserweiterung erfolgen, zum Beispiel ohne dass ein aufwändiges Software-Update für eine erweiterte Visualisierung notwendig wird.

In einigen Ausführungsformen kann eine Vor-Ort-Visualisierung der unterschiedlichen Feldgeräte mit Farben nach, beispielsweise NE 107 (NAMUR Empfehlung 107), bzw. eigener Farbendefinition vom Anlagenbetreiber stattfinden.

In einigen Ausführungsformen ist die Vorschrift vordefiniert und/oder konfigurierbar. Dies kann z.B. in einer Textdatei erfolgen. Die Textdatei kann z.B. eine XML-Syntax (XML: Extensible Markup Language) und/oder eine proprietäre Syntax aufweisen. Damit können vorteilhafterweise Informationen können in geeigneter und gewünschter Weise parametriert werden.

Zum Beispiel können hierfür Standard-Bedienprogramme (z.B. für PC, Notebook, Tablet, Smartphone, ...) über die bekannten drahtlosen oder verkabelten Verfahren (Bluetooth, Serviceschnittstelle, GSM, GPRS, UMTS, LTE, NB-loT ...) aber auch über die Ethernet-Busschiene verwendet werden. Auch hier können z.B. bekannte Technologien zur Gerätebedienung, wie z.B. APP, FDT/DTM, EDD, FDI-Package, etc., verwendet werden. Bei Ethernet Geräten ist sogar die Webbrowserbedienung direkt zwischen Webbrowser und Feldgerät, quasi als Client-Server Struktur, mit integriertem Webinterface möglich. In diesem Fall kann auf möglicherweise auf gerätebeschreibende Dateien mit Technologien wie FDT/DTM, EDD oder FDI-Packages verzichtet werden. Insbesondere kann unerheblich sein, ob das (z.B. Ethernet-) Netzwerk sich lokal befindet, also in einer begrenzten, räumlich nahen Umgebung oder das Ethernet-Netzwerk Internetübergreifend sogar weit entfernt und dezentral vorhanden ist. Die Anzeige an dem Feldgerät kann dabei auch mit Zusatzfunktionalität bzw. Zusatzaufgaben ausgestattet sein, um beispielsweise arithmetische Aufgaben mehrerer Ethernet-Geräte zu verarbeiten und deren Lösung darzustellen. Die Ethernet-Anzeige visualisiert somit Messwerte, Geräteidentifikationsinformationen, Diagnoseinformationen, weitere Geräteinformationen oder berechnete Informationen von verschiedenen Ethernet Feldgeräten, die im Netzwerkverbund hängen. Die Liste der zu visualisierenden Ethernet-Geräten kann vorher wie oben beschrieben parametriert werden.

In einigen Ausführungsformen berücksichtigt die Vorschrift ein Darstellungsformat der Anzeigevorrichtung. Das Darstellungsformat kann z.B. Anzahl der Pixel (z.B. Größe und Auflösung des Displays) oder Farbraum (z.B. schwarz-weiß, 8 Bit, ...), und/oder Weiteres umfassen. Dies kann beispielsweise automatisiert erfolgen und dadurch ein Einstellen der Geräte vereinfachen.

In einigen Ausführungsformen werden die Informationen periodisch, in einem Rundlaufverfahren (round-robin) und/oder als Reaktion auf einen Broadcast empfangen.

In einigen Ausführungsformen unterstützt die Kommunikationsverbindung mindestens eines der Protokolle Ethernet-APL (Advanced Physical Layer), Profinet, EthernetIP, HART-IP (Highway Addressable Remote Transducer), und/oder OPC-UA (OPC Unified Architecture). Insbesondere können Protokolle unterstützt werden, die in der Ethernet-Prozessautomationsumgebung verwendet werden. Weitere Feldgeräte können z.B. über Ethernet und/oder drahtlos angebunden werden.

In einigen Ausführungsformen weist werden verschiedene Teil-Netzwerke der Anlage als ein Gesamt-Adressraum gesehen werden. Das verwendete Protokoll (z.B. Profinet, Ethernet/IP, HART-IP, EtherCAT ...) kann anlagenübergreifend das gleiche Protokoll sein. Für das Umfeld der IIoT/lndustrie 4.0 Applikationen und Dienste können weitere Kommunikationsprotokolle wie OPC-UA unterstützt werden. Dabei können die Netzwerk-Feldgeräte in einem Ethernet-Netzwerkverbund miteinander vernetzt sein. Die Vernetzung kann dabei verdrahtet ausgelegt sein, oder auch drahtlos, z.B. unter Verwendung von geeigneten Ethernet-Wireless-Routern und/oder in Verbindung mit Wireless-Feldgeräten die üblicherweise mit Wifi/Wlan ausgestattet sind.

In einigen Ausführungsformen ist die Anzeigevorrichtung in einem Gehäuse des Feldgeräts integriert oder integrierbar. "Integrierbar" kann z.B. "auf ein Gerät aufschraubbar und/oder aufsteckbar" bedeuten, wie dies beispielsweise bei der VEGA-Geräteserie PLICSCOM ausgeführt ist.

In einigen Ausführungsformen ist die Anzeigevorrichtung als Anzeige- und Bedienvorrichtung ausgeführt. Dies ist z.B. bei der VEGA-Geräteserie PLICSCOM der Fall.

Die Netzwerk-Feldgeräte mit Anzeige können dabei auch als Webbrowser arbeiten und erkennen dabei automatisch, z.B. via Broadcast, alle angeschlossenen Ethernet-Feldgeräte die entweder in eigenem Netzwerk aber auch in benachbarten Netzwerken der betreffenden Anlage zu finden sind.

Ein Aspekt betrifft eine Verwendung eines Feldgeräts wie oben und/oder nachfolgend beschrieben zur Erfassung von Messwerten und zur konsolidierten Darstellung der Messwerte. Dabei können insbesondere die oben beschriebenen Vorteile erzielt werden.

Ein Aspekt betrifft ein Verfahren zur konsolidierten Anzeige der Messwerte eines Feldgeräts mit mindestens einem weiteren Feldgerät, wobei das Feldgerät in einem Netzwerk angeordnet ist und mit dem mindestens einen weiteren Feldgerät in Kommunikationsverbindung steht, mit den Schritten:
Empfangen von Informationen von dem mindestens einen weiteren Feldgerät; Konsolidieren der Informationen von dem Feldgerät mit den Informationen des weiteren Feldgeräts, gemäß einer Vorschrift; und
Anzeigen, auf einer Anzeigevorrichtung des Feldgeräts, der konsolidierten Informationen.

Ein Aspekt betrifft ein Programmelement, welches, wenn es auf einer Recheneinheit eines Feldgeräts ausgeführt wird, die Recheneinheit anweist, das Verfahren wie oben und/oder nachfolgend beschrieben durchzuführen,

Ein Aspekt betrifft ein computerlesbares Medium, auf dem das hier beschriebene Programmelement gespeichert ist.

Es sei noch angemerkt, dass die verschiedenen Ausführungsformen miteinander kombiniert werden können.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

### Kurze Beschreibung der Figuren

Dabei zeigt:
- **Fig. 1**: schematisch ein Beispiel eines Systems zur Fabrikautomatisierung gemäß einer Ausführungsform;
- **Fig. 2**: schematisch ein weiteres Beispiel eines Systems zur Fabrikautomatisierung gemäß einer Ausführungsform;
- **Fig. 3**: schematisch ein Beispiel einer Anzeige eines Feldgeräts gemäß einer Ausführungsform;
- **Fig. 4**: schematisch ein weiteres Beispiel einer Anzeige eines Feldgeräts gemäß einer Ausführungsform;
- **Fig. 5**: schematisch ein weiteres Beispiel einer Anzeige eines Feldgeräts gemäß einer Ausführungsform;
- **Fig. 6**: ein Flussdiagramm mit einem Verfahren gemäß einer Ausführungsform.

### Detaillierte Beschreibung von Ausführungsformen

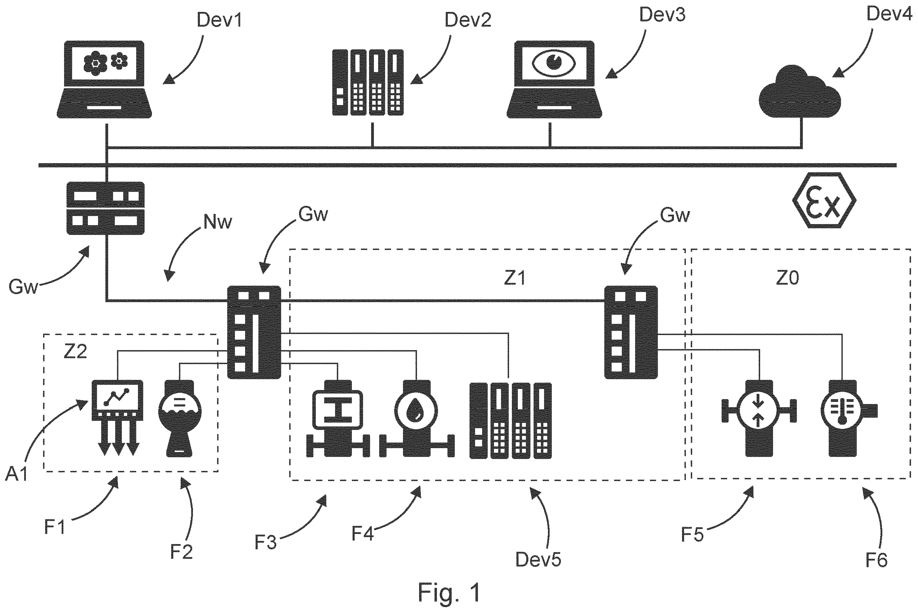

**Fig. 1** zeigt schematisch ein Beispiel eines Systems zur Fabrikautomatisierung gemäß einer Ausführungsform. Das System weist sechs Feldgeräte F1 bis F6 auf, die in unterschiedlichen Zonen Z0 bis Z2 der Fabrik bzw. des Automatisierungssystems angeordnet sind. Die Zone Z0 stellt beispielsweise einen explosionsgefährdeten Bereich ("Ex-Bereich") dar. Die Feldgeräte F1 bis F6 sind mittels eines Netzwerks Nw verbunden. Das Netzwerk Nw kann, z.B. mittels Gateways Gw, Routern, etc. segmentiert sein. Das Netzwerk Nw kann mehrere Protokolle aufweisen, oder auch nur ein einziges Protokoll unterstützen. Zumindest einige Teile des Netzwerks können ein Ethernet-APL-Protokoll unterstützen. In dem Netzwerk Nw sind, neben den Feldgeräten, weitere Geräte Dev1 bis Dev5 angeordnet, beispielsweise Steuerungsgeräte (Dev2, Dev5), Server, die z.B. in einer Cloud angeordnet sind (Dev4), Geräte zur Verwaltung, z.B. für Asset Management (Dev3), Engineering-Workstations (Dev1), und/oder weitere Geräte. Alle dieser Geräte, insbesondere die Feldgerät stehen in Kommunikationsverbindung zueinander, d.h. die Geräte sind prinzipiell über das Netzwerk erreichbar bzw. adressierbar; faktisch können Einschränkungen der Erreichbarkeit existieren, z.B. aus Gründen der Netzwerksicherheit (security). Um die Palette der unterstützten Funktionalitäten besonders deutlich zu machen, weisen die dargestellten Feldgeräte jeweils unterschiedliche Funktionalitäten auf. F1 ist beispielsweise als ein Gerät zur Grenzstandbestimmung mittels Vibrationsgrenzschalter ausgeführt, F2 als ein Füllstand- und/oder Topologiemessgerät mittels eines Radarsensors, F3 als Durchflussmessgerät, F4 als Feuchtemesser, F5 als Drucktransmitter, F6 als Temperaturmessgerät. Es sei erwähnt, dass die genannten Geräte und deren Messprinzipien nur als Beispiele aufgeführt sind. Es können in der Anlage Geräte verwendet werden, die nur einige - oder auch nur eines - der Messprinzipien und/oder weitere Messprinzipien aufweisen und/oder verwenden. Von den dargestellten Feldgeräten F1 bis F6 weist, in dem gezeigten Beispiel, nur das Feldgerät F1 eine Anzeigevorrichtung A1 auf. Die Feldgeräte F2 bis F6 weisen in dem gezeigten Beispiel keine Anzeige, insbesondere keine weitere Vor-Ort-Anzeige, auf, z.B. weil sie nicht zugänglich sind - wie F5 und F6, die in dem Ex-Bereich angeordnet sind -, oder weil für einige Geräte keine Anzeigevorrichtung verfügbar ist.

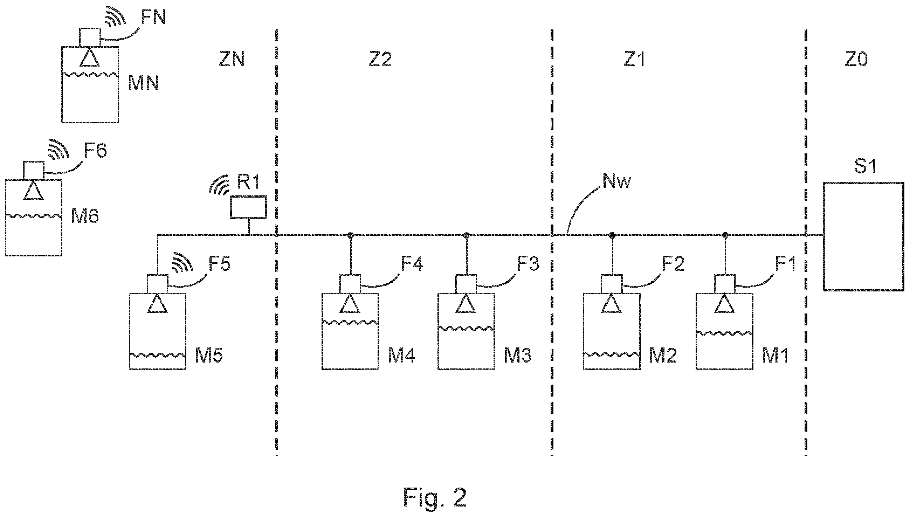

**Fig. 2** zeigt schematisch ein weiteres Beispiel eines Systems zur Fabrikautomatisierung gemäß einer Ausführungsform. Die Funktionalität der in **Fig. 2** dargestellten Feldgeräte (insbesondere deren Messfrontend), die Zonen, etc. können sich, auch bei gleichem Bezugszeichen, von den in **Fig. 1** dargestellten Geräten, Zonen, etc. unterscheiden. **Fig. 2** stellt eine vernetzte Anlage mit Geräten in verschiedenen Zonen dar. Das Gerät S1 stellt dabei ein übergeordnetes Gerät dar, das als SPS (Prozessleitsystem), SCADA (Supervisory Control and Data Acquisition, Überwachung, Steuerung und Datenerfassung) oder als ähnliches Gerät ausgeführt sein kann. Dieses Gerät S1 kann sich z.B. in einer Leitwarte bzw. einem Schaltraum befinden, hier als Zone Z0 benannt. S1 ist an ein Netzwerk Nw angeschlossen, das auch mit der Anlage bzw. dem "Feld" verbunden ist und in Kommunikationsverbindung steht. Das Netzwerk Nw kann Ethernet-basiert sein und/oder ein anderes Netzwerkprotokoll unterstützen. Das Gerät S1 kann beispielsweise auch eine Kopplungseinheit für das Netzwerk Nw beinhaltet. Zum Beispiel kann hier die Kopplungseinheit für eine (z.B. physikalische) Anbindung an Ethernet-APL integriert sein.

Es sind beispielhaft mehrere Zonen gezeigt. In Zone Z1 sind zwei Feldgeräte F1 und F2 angeordnet, welche Messungen M1 bzw. M2 durchführen. Beide Feldgeräte F1 und F2 sind über Kabel mit dem Netzwerk Nw verbunden. Weiter entfernt befindet sich Zone Z2. Hier sind weitere zwei Feldgeräte F3 und F4 angeordnet, welche Messungen M3 bzw. M4 durchführen. Beide Feldgeräte F3 und F4 sind ebenfalls über Kabel mit dem Netzwerk Nw verbunden. Sehr weit entfernt befindet sich Zone Zn. Hier befindet sich ein Wireless-Router R1 der eine WLAN (Wifi) Verbindung zu Verfügung stellt. Über diese sind zwei weitere Feldgeräte F6 und FN drahtlos angebunden, welche Messungen M6 und bzw. Mn durchführen. Deren Messwerte (und weitere Daten) werden von den Feldgeräten F6 und FN drahtlos zum dem Router R1 übertragen, und stehen daher in Kommunikationsverbindung mit anderen Geräten des Netzwerks Nw. Des Weiteren befindet sich ein Feldgerät F5 mit einer Messung M5 in Zone Zn; auch F5 ist über ein Kabel mit dem Netzwerk NW verbunden.

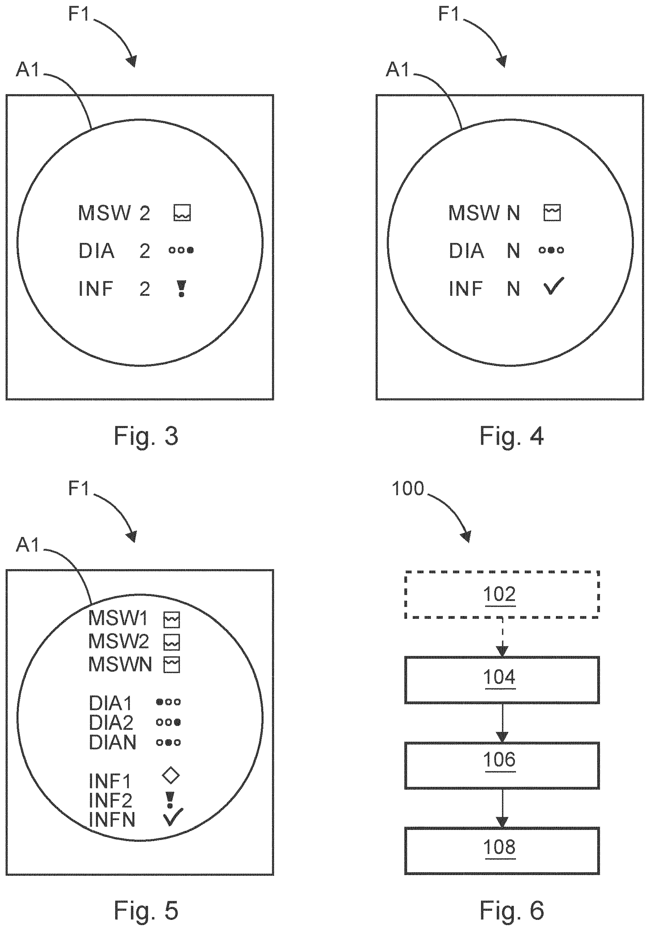

**Fig. 3** bis **Fig. 5** zeigen exemplarisch schematisch Beispiele einer Anzeige eines Feldgeräts gemäß einer Ausführungsform, wie sie z.B. auf einer Anzeigevorrichtung A1 dargestellt sein kann. **Fig. 3** stellt eine Anzeige von Feldgerät F2 (z.B. von **Fig. 2**), die über das Netzwerk Nw übertragen wurde und - als eine Art einer konsolidierten Anzeige - auf der Anzeigevorrichtung A1 von F1 dargestellt wird. Die Art der Konsolidierung in diesem Fall ist, informell dargestellt: "aktueller Messwert, aktuelle Diagnose und Identifikation von F2". Es wird also der Messwert MSW2 von F2 - in diesem Beispiel in Verbindung mit einer Grafikdargestellt, die Diagnose DIA2 (z.B. "in Ordnung") von F2 - in diesem Beispiel in Verbindung mit einer entsprechenden Leuchtinformation, die z.B. durch eine LED realisiert sein kann - und es wird eine Identifikation INF2 von Feldgerät F2 - in diesem Beispiel in Verbindung mit einem Symbol - dargestellt.

**Fig. 4** zeigt schematisch ein weiteres Beispiel einer Anzeige, nämlich des Feldgeräts FN. Auf der Anzeige A1 von Feldgerät F1 wird der Messwert MSWn von FN (z.B. in Verbindung mit einer Grafik), die Diagnose DIAn von FN (in diesem Beispiel in Verbindung mit einer Leuchtinformation) und die Identifikation INFn von Feldgerät FN (in diesem Beispiel in Verbindung mit einem Symbol) dargestellt.

**Fig. 5** zeigt schematisch ein weiteres Beispiel einer Anzeige, auf der Anzeigevorrichtung A1 des Feldgeräts F1, gemäß einer Ausführungsform. Dabei werden Werte einer Vielzahl von Feldgeräten in konsolidierter Weise dargestellt. In diesem Beispiel ist dies die Anzeige A1 von Feldgerät 1 F1 selbst. Auf der Anzeige A1 wird der Messwert MSW1 von F1 (in diesem Beispiel in Verbindung mit einer Grafik), die Diagnose DIA1 von F1 (in diesem Beispiel in Verbindung mit entsprechender Leuchtinformation) und die Identifikation INF1 von F1 (in diesem Beispiel in Verbindung mit einem Symbol) dargestellt. Weiterhin werden auch zumindest einige Daten der Feldgeräte F2 und Fn dargestellt, auch in einer trivialen Konsolidierung, d.h. ohne Summenbildung etc. So werden, neben dem Messwert MSW1 von F1, auch die Messwerte MSW2 und MSWn von F2 bzw. Fn, die Diagnose DIA2 und DIAn, und die Identifikationen INF2 und INFn dargestellt. Es wird deutlich, dass es damit möglich wird, alle relevant erscheinenden Informationen konsolidiert auf einer einzigen Anzeige eines der Feldgeräte - in diesem Beispiel: auf der Anzeigevorrichtung A1 des Feldgeräts F1 - darzustellen. Die gezeigten (bzw. zu zeigenden) Informationen können dabei in einigen Ausführungsformen konfigurierbar sein, z.B. mittels einer Textdatei.

**Fig. 6** zeigt ein Flussdiagramm 100 mit einem Verfahren zur konsolidierten Anzeige der Messwerte eines Feldgeräts F1 mit mindestens einem weiteren Feldgerät Fn gemäß einer Ausführungsform. In einem optionalen Schritt 102 wird eine Nachricht - z.B. ein Broadcast oder Multicast - an diejenigen Feldgeräte gesandt, deren Messwerte und/oder andere Daten angezeigt werden sollen. In einem Schritt 104 werden Informationen von dem mindestens einen weiteren Feldgerät Fn empfangen. In einem Schritt 106 werden die Informationen von dem Feldgerät F1 mit den Informationen des weiteren Feldgeräts Fn, gemäß einer Vorschrift konsolidiert. Die Art des Konsolidierens kann vordefiniert, konfigurierbar oder eine Mischung aus beiden sein. In einem Schritt 108 werden, auf einer Anzeigevorrichtung A1 des Feldgeräts F1, die konsolidierten Informationen angezeigt.

## Patentansprüche

1. Feldgerät (F1), aufweisend einen Sensor (S1) zur Füllstandmessung, zur Topologiebestimmung, zur Grenzstandbestimmung, zur Durchflussmessung,
zur Druckmessung und/oder zur Temperaturmessung,
wobei das Feldgerät (F1) in einem Netzwerk angeordnet ist und dazu eingerichtet ist, mit mindestens einem weiteren Feldgerät in Kommunikationsverbindung zu stehen, wobei das Feldgerät (F1) weiterhin eine Anzeigevorrichtung (A1) aufweist, die dazu eingerichtet ist, Informationen von dem mindestens einen weiteren Feldgerät (Fn) zu empfangen und die Informationen gemäß einer Vorschrift mit den Informationen des weiteren Feldgeräts (Fn) zu konsolidieren.

2. Feldgerät (F1) nach Anspruch 1,
wobei die Informationen Messwerte und/oder Diagnosen des mindestens einen weiteren Feldgerät (Fn) umfassen.

3. Feldgerät (F1) nach Anspruch 1 oder 2,
wobei die Informationen weiterhin eine Identität des mindestens einen weiteren Feldgerät (Fn) umfassen.

4. Feldgerät (F1) nach einem der vorhergehenden Ansprüche,
wobei das mindestens eine weitere Feldgerät ein Feldgerät desselben Typs wie das Feldgerät (F1) ist.

5. Feldgerät (F1) nach einem der vorhergehenden Ansprüche,
wobei die Vorschrift eine Darstellung von Einzelwerten und/oder eine Darstellung einer Funktion der Einzelwerte umfasst.

6. Feldgerät (F1) nach einem der vorhergehenden Ansprüche,
wobei die Vorschrift vordefiniert und/oder konfigurierbar ist.

7. Feldgerät (F1) nach einem der vorhergehenden Ansprüche,
wobei die Vorschrift ein Darstellungsformat der Anzeigevorrichtung (A1) berücksichtigt.

8. Feldgerät (F1) nach einem der vorhergehenden Ansprüche,
wobei die Informationen periodisch, in einem Rundlaufverfahren und/oder als Reaktion auf einen Broadcast empfangen werden.

9. Feldgerät (F1) nach einem der vorhergehenden Ansprüche,
wobei die Kommunikationsverbindung mindestens eines der Protokolle Ethernet-APL, Profinet, EthernetlP, HART-IP, und/oder OPC-UA unterstützt.

10. Feldgerät (F1) nach einem der vorhergehenden Ansprüche,
wobei die Anzeigevorrichtung (A1) in einem Gehäuse des Feldgeräts (F1) integriert oder integrierbar ist.

11. Feldgerät (F1) nach einem der vorhergehenden Ansprüche,
wobei die Anzeigevorrichtung (A1) als Anzeige- und Bedienvorrichtung ausgeführt ist.

12. Verwendung eines Feldgeräts (F1) nach einem der vorhergehenden Ansprüche zur Erfassung von Messwerten und zur konsolidierten Darstellung der Messwerte.

13. Verfahren zur konsolidierten Anzeige der Messwerte eines Feldgeräts (F1) mit mindestens einem weiteren Feldgerät (Fn), wobei das Feldgerät (F1) in einem Netzwerk angeordnet ist und mit dem mindestens einen weiteren Feldgerät (Fn) in Kommunikationsverbindung steht, mit den Schritten:
empfangen von Informationen von dem mindestens einen weiteren Feldgerät (Fn);
konsolidieren der Informationen von dem Feldgerät (F1) mit den Informationen des weiteren Feldgeräts (Fn), gemäß einer Vorschrift; und
anzeigen, auf einer Anzeigevorrichtung (A1) des Feldgeräts (F1), der konsolidierten Informationen.

14. Programmelement, welches, wenn es auf einer Recheneinheit eines Feldgeräts (F1) ausgeführt wird, die Recheneinheit anweist, das Verfahren nach Anspruch 13 durchzuführen,

15. Computerlesbares Medium, auf dem ein Programmelement nach dem vorhergehenden Anspruch gespeichert ist.

## Geänderte Patentansprüche

### Geänderte Patentansprüche gemäss Regel 137(2) EPÜ.

1. Feldgerät (F1), aufweisend einen Sensor (S1) zur Füllstandmessung, zur Topologiebestimmung, zur Grenzstandbestimmung, zur Durchflussmessung, zur Druckmessung und/oder zur Temperaturmessung,
wobei das Feldgerät (F1) in einem Netzwerk angeordnet ist und dazu eingerichtet ist, mit mindestens einem weiteren Feldgerät in Kommunikationsverbindung zu stehen,
wobei das Feldgerät (F1) weiterhin eine Anzeigevorrichtung (A1) aufweist, die dazu eingerichtet ist, Informationen von dem mindestens einen weiteren Feldgerät (Fn) zu empfangen und die Informationen gemäß einer Vorschrift mit den Informationen des weiteren Feldgeräts (Fn) zu konsolidieren,
wobei die Vorschrift eine Darstellung von Einzelwerten und/oder eine Darstellung einer Funktion der Einzelwerte umfasst, und
wobei die Vorschrift ein Darstellungsformat der Anzeigevorrichtung (A1) berücksichtigt, wobei das Darstellungsformat eine Größe, eine Auflösung und/oder einen Farbraum des Displays der Anzeigevorrichtung (A1) umfasst.

2. Feldgerät (F1) nach Anspruch 1,
wobei die Informationen Messwerte und/oder Diagnosen des mindestens einen weiteren Feldgerät (Fn) umfassen.

3. Feldgerät (F1) nach Anspruch 1 oder 2,
wobei die Informationen weiterhin eine Identität des mindestens einen weiteren Feldgerät (Fn) umfassen.

4. Feldgerät (F1) nach einem der vorhergehenden Ansprüche,
wobei das mindestens eine weitere Feldgerät ein Feldgerät desselben Typs wie das Feldgerät (F1) ist.

5. Feldgerät (F1) nach einem der vorhergehenden Ansprüche,
wobei die Vorschrift vordefiniert und/oder konfigurierbar ist.

6. Feldgerät (F1) nach einem der vorhergehenden Ansprüche,
wobei die Informationen periodisch, in einem Rundlaufverfahren und/oder als Reaktion auf einen Broadcast empfangen werden.

7. Feldgerät (F1) nach einem der vorhergehenden Ansprüche,
wobei die Kommunikationsverbindung mindestens eines der Protokolle Ethernet-APL, Profinet, EthernetlP, HART-IP, und/oder OPC-UA unterstützt.

8. Feldgerät (F1) nach einem der vorhergehenden Ansprüche,
wobei die Anzeigevorrichtung (A1) in einem Gehäuse des Feldgeräts (F1) integriert oder integrierbar ist.

9. Feldgerät (F1) nach einem der vorhergehenden Ansprüche,
wobei die Anzeigevorrichtung (A1) als Anzeige- und Bedienvorrichtung ausgeführt ist.

10. Verwendung eines Feldgeräts (F1) nach einem der vorhergehenden Ansprüche zur Erfassung von Messwerten und zur konsolidierten Darstellung der Messwerte.

11. Verfahren zur konsolidierten Anzeige der Messwerte eines Feldgeräts (F1) mit mindestens einem weiteren Feldgerät (Fn), wobei das Feldgerät (F1) in einem Netzwerk angeordnet ist und mit dem mindestens einen weiteren Feldgerät (Fn) in Kommunikationsverbindung steht, mit den Schritten:
empfangen von Informationen von dem mindestens einen weiteren Feldgerät (Fn);
konsolidieren der Informationen von dem Feldgerät (F1) mit den Informationen des weiteren Feldgeräts (Fn), gemäß einer Vorschrift,
wobei die Vorschrift eine Darstellung von Einzelwerten und/oder eine Darstellung einer Funktion der Einzelwerte umfasst; und
anzeigen, auf einer Anzeigevorrichtung (A1) des Feldgeräts (F1), der konsolidierten Informationen,
wobei die Vorschrift ein Darstellungsformat der Anzeigevorrichtung (A1) berücksichtigt, wobei das Darstellungsformat eine Größe, eine Auflösung und/oder einen Farbraum des Displays der Anzeigevorrichtung (A1) umfasst.

12. Programmelement, welches, wenn es auf einem Feldgerät (F1) ausgeführt wird, die Recheneinheit anweist, das Verfahren nach Anspruch 11 durchzuführen.

13. Computerlesbares Medium, auf dem ein Programmelement nach dem vorhergehenden Anspruch gespeichert ist.
